# EUROPEAN PATENT APPLICATION

(11) **EP 4 685 428 A1**
(43) Date of publication of application: **28.01.2026**
(21) Application number: 24781063.3
(22) Date of filing: 08.03.2024
(51) Int. Cl.: F41A 33/00, G09B 9/00, G06Q 50/20, G06Q 50/10, F41G 3/26, F41J 9/14, H04N 13/302, G01S 17/06

(54) **METHOD AND SYSTEM FOR EXTENDED REALITY (XR)-BASED ULTRA-REALISTIC COMBAT TRAINING USING REAL FIREARM WITH XR CONTROLLER**

(30) Priority: 24.03.2023 KR 20230038376
(71) Applicant: Newjak Co.Ltd, Naju-si Jeollanam-do 58322 (KR)
(72) Inventor: JUNG, Hae Hyun, Seoul 08209 (KR)
(74) Representative: Sander, Rolf
(86) International application number: PCT/KR2024/003007
(87) International publication number: WO 2024/205071

(57) **Abstract**

Disclosed is a method for extended reality (XR)-based ultra-realistic combat training using a real firearm with an XR controller. The method comprises: transmitting XR content from a service providing server to a splitter of an XR environment, and transmitting the XR content from the splitter to projectors of the XR environment so that a plurality of projectors project the XR content onto the XR environment; detecting, by sensors of the XR environment, positions of a plurality of XR controller and transmitting the detected positions to the service providing server; receiving, by the service providing server, interactions between the XR controller and the real firearm from the plurality of XR controller; correcting, by the service providing server, the XR content according to the interactions between the XR controller and the real firearm and the positions of the XR controller, and transmitting the corrected XR content to the splitter of the XR environment; and transmitting the corrected XR content from the splitter to the projectors and projecting the corrected XR content onto the XR environment by the plurality of projectors. The interactions between the XR controller and the real firearm include at least one recognized by the XR controller of whether a trigger of the real firearm with the XR controller attached is pulled, and whether a magazine is replaced.

## Description

### [TECHNICAL FIELD]

The present invention relates to a method and system for extended reality (XR)-based ultra-realistic combat training using a real firearm with an XR controller. More particularly, the invention enables combat training in an XR environment by attaching an XR controller to a real firearm used in actual combat training, and allows adjustment of training difficulty depending on whether the aiming position of the real firearm with the XR controller is displayed.

### [BACKGROUND ART]

With the advent of the Fourth Industrial Revolution, the military training field is also accelerating projects for applying ICT to national defense. In particular, due to the limited land environment, there is a lack of training space for combat, making it difficult to conduct practical training in an environment similar to an actual battlefield. Moreover, in high-risk scenarios, real training is often not feasible. Therefore, there is a need for combat training using virtual reality (VR).

However, conventional VR-based combat training systems allow training only after wearing a head-mounted display (HMD) or fixing the body to participate in the training system, which cannot provide training comparable to real combat. In particular, an HMD not only reduces immersion by being worn on the face but also requires separate equipment. Furthermore, the inability to use the same equipment as in real operations remains a problem.

As prior art, Korean Patent Publication No. 10-2022-0097352 ("Method and System for Providing Virtual Training Based on Extended Reality") discloses a method of providing virtual training content comprising acquiring actual training content, processing the acquired content into virtual training content, transmitting the virtual training content to a user, and reproducing the virtual training content. However, such prior art merely provides virtual content and does not allow realistic training using a real firearm.

### [DETAILED DESCRIPTION OF INVENTION]

### [TECHNICAL SOLUTIONS]

The present invention has been devised to solve the problems of the conventional technologies described above. Specifically, it provides a method and system for XR-based ultra-realistic combat training, in which a trainee can perform combat training in an XR environment by attaching an XR controller to a real firearm used in actual training, and the difficulty level of the training can be adjusted depending on whether the aiming position of the real firearm with the XR controller is displayed.

According to an embodiment of the present invention, a method for extended reality (XR)-based ultra-realistic combat training using a real firearm with an XR controller comprises:
- transmitting XR content from a service providing server to a splitter of an XR environment, and transmitting the XR content from the splitter to projectors of the XR environment so that multiple projectors project the XR content onto the XR environment;
- detecting positions of multiple XR controller by sensors of the XR environment, and transmitting the detected positions to the service providing server;

- receiving, at the service providing server, interactions between the XR controller and real firearms from the multiple XR controller;
- correcting the XR content according to the positions of the XR controller and the interactions between the XR controller and the real firearms, and transmitting the corrected XR content to the splitter of the XR environment; and
- transmitting the corrected XR content received by the splitter to the projectors, and projecting the corrected XR content onto the XR environment by the projectors.

Here, the interactions between the XR controller and the real firearms include at least one of whether the trigger of the real firearm with the XR controller attached is pulled, and whether the magazine is replaced, recognized by the XR controller.

According to another embodiment, a system for XR-based ultra-realistic combat training using a real firearm with an XR controller comprises:
- an XR environment configured to detect the positions of multiple XR controller and to project XR content received from a service providing server; and
- a service providing server configured to generate XR content, transmit the XR content to the XR environment, receive the positions of multiple XR controller from the XR environment, recognize interactions between the XR controller and real firearms, and correct the XR content according to the positions of the XR controller and the interactions.

### [EFFECT OF INVENTION]

According to an embodiment of the present invention, a trainee can perform combat training in an XR environment by attaching an XR controller to a real firearm used in actual training.

Furthermore, the difficulty of combat training can be adjusted depending on whether the aiming position of the real firearm with the XR controller is displayed.

### [BRIEF DESCRIPTION OF THE DRAWINGS]

FIG. 1 is a flowchart illustrating a method for extended reality (XR)-based ultra-realistic combat training using a real firearm with an XR controller according to an embodiment of the present invention.
FIG. 2 is a block diagram illustrating a system for extended reality (XR)-based ultra-realistic combat training using a real firearm with an XR controller according to an embodiment of the present invention.
FIG. 3 is a diagram showing an actual appearance of a real firearm with an XR controller attached.
FIG. 4 is a diagram showing a trainee aiming at a target within an XR environment using a real firearm with an XR controller attached.
FIG. 5 is a diagram showing a real firearm with an XR controller attached and an internal structure of the XR controller.

### [DETAILED DESCRIPTION]

Reference will now be made in detail to embodiments of the present invention with reference to the accompanying drawings.

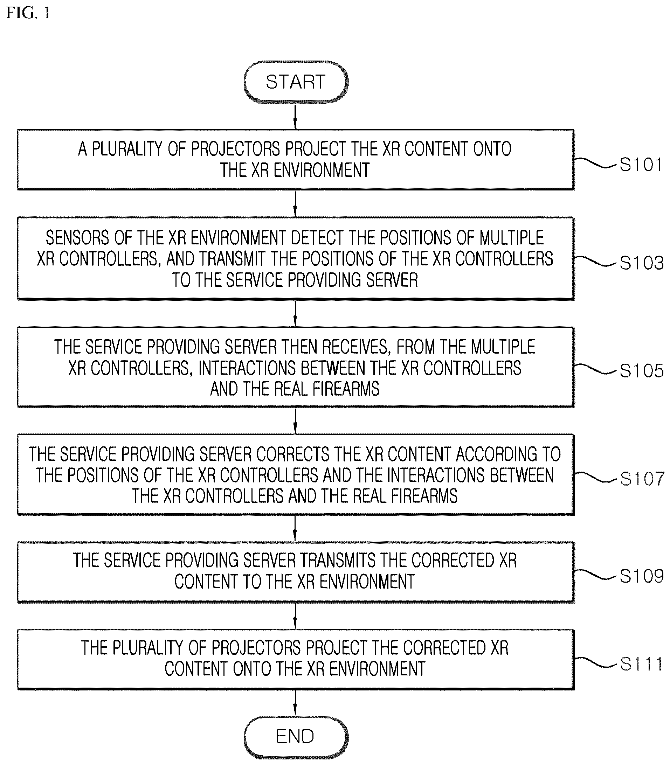

FIG. 1 is a flowchart illustrating a method for extended reality (XR)-based ultra-realistic combat training using a real firearm with an XR controller according to an embodiment of the present invention.

Referring to FIG. 1, the XR-based ultra-realistic combat training method using a real firearm with an XR controller comprises the following steps.

First, a service providing server (200) transmits XR content to a splitter (130) of an XR environment (100), and the splitter (130) transmits the XR content to projectors (140) of the XR environment (100), so that a plurality of projectors (140) project the XR content onto the XR environment (100) (S101). The splitter (130) is a device for separating specific signals according to characteristics, and may distribute the XR content received from the service providing server (200) to the plurality of projectors (140). Since the XR environment (100) may include a floor and four walls, making a total of five surfaces, multiple projectors (140) are required to realistically display 360° images on the five surfaces. However, the XR environment (100) is not necessarily limited to five surfaces and may, in another embodiment, include six surfaces including a ceiling.

Next, sensors (110) of the XR environment (100) detect the positions of multiple XR controller (400), and transmit the positions of the XR controller (400) to the service providing server (200) (S103). The XR controller (400) are attached to the real firearms (300), thereby indicating the positions of the firearms (300). The sensors (110) may be a plurality of position sensors, and each sensor (110) may calculate the position of each XR controller (400) as coordinate values. The sensors (110) may also detect the height of the XR controller (400). Depending on the detected height of an XR controller (400), it may be determined whether a trainee holding the real firearms (300) with the XR controller (400) attached is aiming while crouching or standing. In addition, when detecting the positions of the XR controller (400), a LiDAR (120) of the XR environment (100) may be used to additionally detect the positions. The LiDAR (120) may be a laser rangefinder having a scanning technology that measures the time taken for laser pulses to return. The LiDAR (120) of the XR environment (100) may be provided on each of the five surfaces of the XR environment (100), but is not limited thereto.

The service providing server (200) then receives, from the XR controller (400), interactions between the XR controller (400) and the real firearms (300) (S105). The interactions between the XR controller (400) and the real firearms (300) may include at least one of whether the trigger of the real firearms (300) with the XR controller (400) attached is pulled, and whether the magazine is replaced, but are not limited thereto. For example, when the XR controller (400) recognizes that the trigger of the real firearms (300) has been pulled, the XR controller (400) may transmit the interaction to the service providing server (200).

Subsequently, the service providing server (200) corrects the XR content according to the positions of the XR controller (400) and the interactions between the XR controller (400) and the real firearms (300) (S107), and transmits the corrected XR content to the splitter (130) of the XR environment (100) (S109). The splitter (130) of the XR environment (100) transmits the corrected XR content received to the projectors (140), and the plurality of projectors (140) project the corrected XR content onto the XR environment (100) (S111).

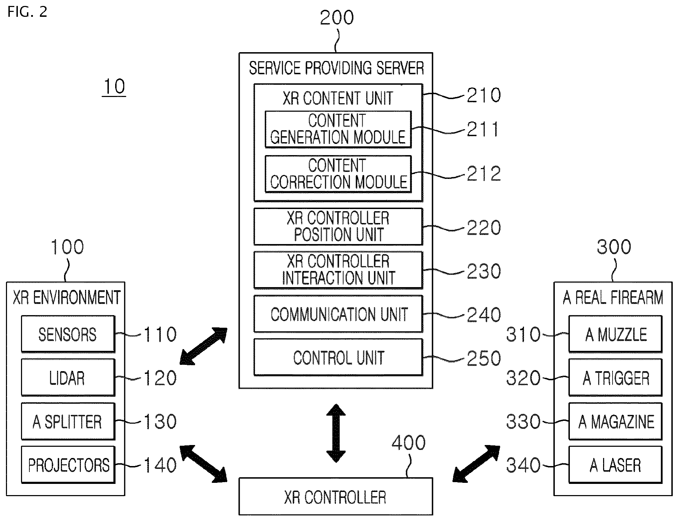

FIG. 2 is a block diagram illustrating a system for extended reality (XR)-based ultra-realistic combat training using a real firearm with an XR controller according to an embodiment of the present invention.

Referring to FIG. 2, the XR-based ultra-realistic combat training system (10) using a real firearm with an XR controller (400) comprises an XR environment (100), a service providing server (200), a real firearm (300), and the XR controller (400).

The XR environment (100) refers to an environment in which XR content is reproduced and at least one trainee participates in combat training. The XR environment (100) may include five surfaces consisting of a floor and four walls, but is not limited thereto. The XR environment (100) includes sensors (110), a LiDAR (120), a splitter (130), and projectors (140).

The sensors (110) may be position sensors, and a plurality of sensors (110) may be provided in the XR environment (100) to detect the positions of the XR controller (400). The sensors (110) may calculate coordinate values representing the positions of the XR controller (400) and transmit the coordinate values to the service providing server (200). The sensors (110) may also calculate the height of the XR controller (400), allowing determination of whether a trainee holding a real firearm (300) with an XR controller (400) attached is standing or crouching. Furthermore, the sensors (110) not only detect the positions of the XR controller (400) to determine the positions of the trainees, but may also calculate the aiming directions and positions of the real firearms (300) with the XR controller (400) attached.

The LiDAR (120) may be a laser rangefinder equipped with scanning technology that measures the time taken for laser pulses to return. Although the sensors (110) detect the positions of the XR controller (400), the LiDAR (120) may additionally detect the positions more accurately. The LiDAR (120) may be provided on each of the five surfaces of the XR environment (100), but is not limited thereto.

The splitter (130) is a device for separating signals according to characteristics. The splitter (130) may separate the XR content received from the service providing server (200) and transmit the separated content to the projectors (140). A plurality of splitters (130) may be used. Since the XR environment (100) may include five surfaces for 360° display, the splitter (130) distributes the XR content to the projectors (140). The projectors (140) project the XR content received from the splitter (130) onto the XR environment (100), and a plurality of projectors may be employed.

The service providing server (200) comprises an XR content unit (210), an XR controller position unit (220), an XR controller interaction unit (230), a communication unit (240), and a control unit (250).

The XR content unit (210) includes a content generation module (211) and a content correction module (212). The content generation module (211) may generate XR content simulating various situations similar to actual combat training. For example, the module may generate XR content for situations such as attacking hidden enemies or training under conditions of limited visibility due to heavy fog. The content generation module (211) may generate combat training content classified into a first mode, a second mode, and a third mode according to difficulty. The difficulty may be determined based on whether the aiming position of the real firearm (300) with the XR controller (400) attached is displayed in the XR content or in the XR environment (100). A single XR content item may be generated with three difficulty modes.

For example, if the content generation module (211) generates XR content A for hitting a target at a distance of 10 meters, the XR content A may be generated in three different modes: first mode, second mode, and third mode.

The **first mode** is the easiest mode, in which the aiming position is displayed within the XR content according to the muzzle direction of the real firearm (300) with the XR controller (400) attached. The first mode may be used in the early stage of combat training, allowing the trainee to clearly identify the aiming position. The aiming position may be calculated by the service providing server (200) based on the position of the XR controller (400) detected by the sensors (110) of the XR environment (100).

The **second mode** is an intermediate mode, in which a laser (340) attached to the real firearm (300) with the XR controller (400) attached displays the aiming position within the XR environment (100), but the aiming position is not displayed within the XR content. Thus, when using the second mode, the trainee must turn on the laser (340) attached to the real firearm (300) before starting training.

The **third mode** is the most difficult mode, in which no aiming position is displayed either in the XR content or in the XR environment (100) according to the muzzle direction of the real firearm (300) with the XR controller (400) attached. In this mode, the trainee cannot know the exact aiming position during training, making the training most similar to real combat situations, and suitable for the final stage of combat training.

The content correction module (212) may correct the XR content based on the positions of the XR controller (400) and the interactions between the XR controller (400) and the real firearms (300). The content correction module (212) may receive the interactions from the XR controller interaction unit (230) and the positions from the XR controller position unit (220), and then correct the XR content accordingly.

For example, if the interaction received is "magazine replacement required," the content correction module (212) may correct the XR content such that bullets of the corresponding real firearm (300) with the XR controller (400) attached are no longer fired. As another example, if the interaction received is "trigger pulled," the content correction module (212) may correct the XR content so that a bullet is fired at the aiming position of the corresponding real firearm (300) with the XR controller (400) attached. The aiming position may be determined based on the position of the XR controller (400). Furthermore, if the positions of the multiple XR controller (400) indicate forward movement, the content correction module (212) may correct the XR content to display progression in that direction. The corrected XR content may be transmitted to the splitter (130) of the XR environment (100).

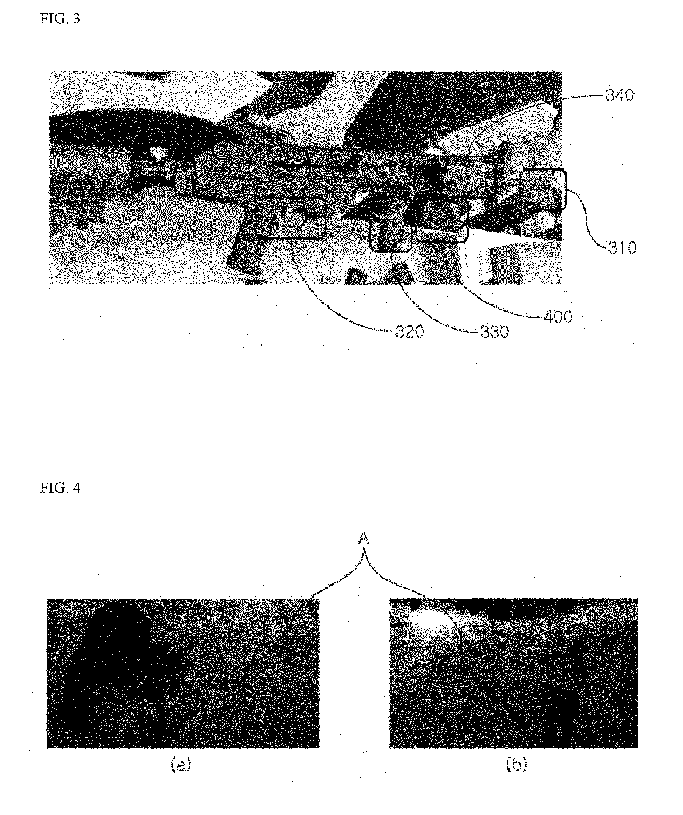

FIG. 3 is a diagram showing an actual appearance of a real firearm (300) with an XR controller (400) attached.

Referring to FIG. 3, the real firearm (300) includes a muzzle (310), a trigger (320), a magazine (330), and a laser (340). The XR controller (400) is attached to the lower portion of the real firearm (300), but is not limited thereto and may be attached to any location that does not interfere with the movement of the firearm (300). Since the XR controller (400) is attached to the real firearm (300), the positions of the XR controller (400) and the real firearm (300) are considered the same. The XR controller (400) is connected to the trigger (320) and the magazine (330), enabling it to detect whether the trigger (320) is pulled or the magazine (330) is replaced, and transmit such interactions to the service providing server (200).

FIG. 4 is a diagram showing a trainee aiming at a target within the XR environment (100) using a real firearm (300) with an XR controller (400) attached.

Referring to FIG. 4, the trainee uses the first mode to aim at a target within the XR environment (100) using the real firearm (300) with the XR controller (400) attached. Since the first mode is employed, an aiming position (A) is displayed as an arrow mark within the XR content, indicating the current aiming point. The aiming position may be determined based on the muzzle direction of the real firearm (300) with the XR controller (400) attached. The sensors (110) of the XR environment (100) measure the position and movement direction of the XR controller (400) and transmit them to the service providing server (200). The XR controller position unit (220) of the service providing server (200) receives this information to determine the aiming position. The XR controller position unit (220) transmits the aiming position to the XR content unit (210), and the content correction module (212) corrects the XR content based on the aiming position received.

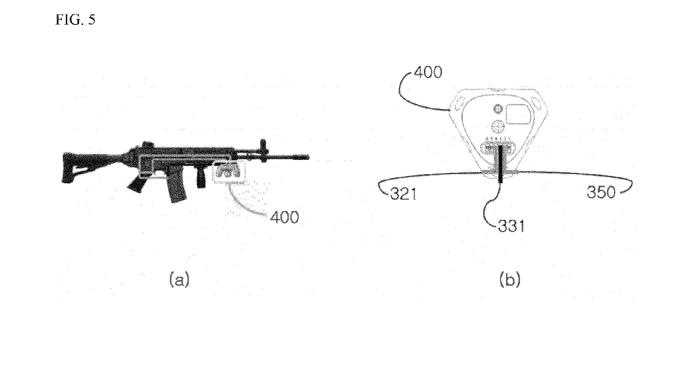

FIG. 5 is a diagram showing a real firearm (300) with an XR controller (400) attached and an internal structure of the XR controller (400).

Referring to FIG. 5(a), a real firearm (300) with the XR controller (400) attached is shown. A green wire represents a wire connected to a first module (321), a red wire represents a wire connected to a second module (331), and a blue wire represents a ground wire.

Referring to FIG. 5(b), the internal structure of the XR controller (400) is shown. The first module (321) is connected to a trigger button of the real firearm (300), and when the trigger button is pressed, the first module (321) of the XR controller (400) is activated and recognizes a trigger pull, but is not limited thereto. The second module (331) is connected to a magazine mounting portion of the real firearm (300), and when the magazine (330) is mounted, the second module (331) is pulled and recognizes that the magazine is mounted. If the magazine (330) is not mounted, the second module (331) is not activated and recognizes that the magazine is not mounted. The third module (350) may be a ground line.

The XR controller (400) may further include a GPS module, enabling the sensors (110) and LiDAR (120) of the XR environment (100) to detect the position of the XR controller (400).

The embodiments of the invention have been described with reference to the drawings, but these are merely illustrative examples. It will be understood by those skilled in the art that various modifications and equivalent embodiments can be made therefrom. Therefore, the true technical scope of the invention should be defined by the appended claims.

## Claims

1. A method for extended reality (XR)-based ultra-realistic combat training using a real firearm with an XR controller, comprising:
transmitting, by a service providing server, XR content to a splitter of an XR environment, and transmitting, by the splitter, the XR content to projectors of the XR environment so that a plurality of projectors project the XR content onto the XR environment;
detecting, by sensors of the XR environment, positions of a plurality of XR controller, and transmitting the detected positions of the XR controller to the service providing server;
receiving, by the service providing server, interactions between the XR controller and the real firearm from the plurality of XR controller;
correcting, by the service providing server, the XR content according to the interactions between the XR controller and the real firearm and the positions of the XR controller, and transmitting the corrected XR content to the splitter of the XR environment; and
transmitting, by the splitter of the XR environment, the corrected XR content to the projectors, and projecting, by the plurality of projectors, the corrected XR content onto the XR environment,
wherein the interactions between the XR controller and the real firearm include at least one recognized by the XR controller of whether a trigger of the real firearm with the XR controller attached is pulled, and whether a magazine is replaced.

2. The method of claim 1, wherein:
detecting, by the sensors of the XR environment, the positions of the plurality of XR controller and transmitting the positions to the service providing server includes additionally detecting, by a LiDAR (Light Detection And Ranging) of the XR environment, the positions of the XR controller and transmitting the positions to the service providing server,
and wherein the sensors and the LiDAR of the XR environment calculate the positions of the plurality of XR controller as coordinate values within the XR environment.

3. The method of claim 1, wherein:
the XR content is combat training content configured in a first mode, a second mode, and a third mode depending on whether an aiming position of the real firearm with the XR controller attached is displayed;
the first mode is a mode in which the aiming position is displayed within the XR content according to a muzzle direction of the real firearm with the XR controller attached;
the second mode is a mode in which a laser attached to the real firearm with the XR controller attached displays the aiming position within the XR environment according to the muzzle direction, and the aiming position is not displayed within the XR content; and
the third mode is a mode in which the aiming position according to the muzzle direction of the real firearm with the XR controller attached is not displayed in either the XR content or the XR environment.

4. A system for extended reality (XR)-based ultra-realistic combat training using a real firearm with an XR controller, comprising:
an XR environment configured to detect positions of a plurality of XR controller and to project XR content received from a service providing server; and
the service providing server configured to generate XR content, transmit the XR content to the XR environment, receive the positions of the plurality of XR controller from the XR environment, recognize interactions between the XR controller and the real firearm, and correct the XR content according to the positions of the XR controller and the interactions.

5. The system of claim 4, wherein:
the XR content is combat training content configured in a first mode, a second mode, and a third mode depending on whether an aiming position of the real firearm with the XR controller attached is displayed;
the first mode is a mode in which the aiming position is displayed within the XR content according to a muzzle direction of the real firearm with the XR controller attached;
the second mode is a mode in which a laser attached to the real firearm with the XR controller attached displays the aiming position within the XR environment according to the muzzle direction, and the aiming position is not displayed within the XR content; and
the third mode is a mode in which the aiming position according to the muzzle direction of the real firearm with the XR controller attached is not displayed in either the XR content or the XR environment.
